(19) Europäisches Patentamt
European Patent Office
Office européen des brevets

(11) Publication number: 0 139 453
A1

(12) # EUROPEAN PATENT APPLICATION

(21) Application number: 84306161.5

(22) Date of filing: 10.09.84

(51) Int. Cl.[4]: C 09 D 3/74
C 08 L 51/04

(30) Priority: 09.09.83 US 530798

(43) Date of publication of application:
02.05.85 Bulletin 85/18

(84) Designated Contracting States:
BE CH DE FR GB IT LI LU NL SE

(71) Applicant: THE STANDARD OIL COMPANY
Midland Building
Cleveland, Ohio 44115(US)

(72) Inventor: Shank, Raymond S.
9950 Whitewood Road
Brecksville Ohio 44141(US)

(72) Inventor: Wardlow, Eddie
16116 Cloverside Avenue
Cleveland Ohio 44128(US)

(74) Representative: Smith, Sydney et al,
Elkington and Fife High Holborn House 52/54 High
Holborn
London WC1V 6SH(GB)

(54) **Crosslinked coatings form high nitrile resins.**

(57) High nitrile, resinous coatings with excellent impact resistance, excellent barrier properties and low film-forming temperatures are prepared from (1) olefinically unsaturated nitrile monomers, (2) acrylate ester monomers, (3) a monomer containing at least two carbon double bonds and (4) a rubbery polymer of a conjugated diene and an optional comonomer.

EP 0 139 453 A1

Croydon Printing Company Ltd.

0139453

# CROSSLINKED COATINGS FROM HIGH NITRILE RESINS

## BACKGROUND OF THE INVENTION

### Field of the Invention:

The invention relates to a resilient, water-borne, thermoplastic, low film-forming temperature coating with a high nitrile content. More specifically this invention relates to a corrosion resistant polymeric coating employing a high proportionate amount of olefinic nitrile monomer and a difunctional monomer capable of subsequent crosslinking.

### Description of the Prior Art:

Coatings with a high nitrile content are known in the art. For example, U.S. Pat. No. 4,329,401 teaches latex coatings derived from acrylonitrile and methyl acrylate grafted onto a rubbery polymer backbone. These coatings exhibited the properties normally associated with nitrile resins such as low oxygen and moisture permeability and good chemical resistance.

Also known in the art are crosslinked resins and coatings derived from crosslinked resins. In these resins and coatings, the polymer chains are linked to parallel or adjacent chains by a monomer bonded to both polymer chains. Crosslinked resins and coatings are known for their hardness, toughness and permanence.

An object of this invention is a coating with the barrier and chemical resistance properties associated with nitrile resin based coatings and the hardness, toughness and permanence attributed to crosslinked resins and coatings.

## SUMMARY OF THE INVENTION

A coating comprising a crosslinked copolymer of (1) olefinically unsaturated nitrile, (2) an acrylate ester, (3) a monomer containing at least two carbon to carbon double bonds, such that one double bond will partake in an initial graft polymerization reaction and a second double bond will react in a subsequent reaction to crosslink the graft polymers; and (4) a rubbery polymer of from 50 to 100 percent by weight of a conjugated diene monomer and from 0 to 50 percent by weight of at least one comonomer copolymerizable with the conjugated diene monomer.

## DETAILED DESCRIPTION OF THE INVENTION

This invention relates to water-borne, high nitrile resinous coatings with excellent impact resistance, excellent barrier properties and low film-forming temperatures. The coatings contain at least 10 percent by weight of polymerized olefinically unsaturated nitriles. More preferably the coating contains more than 50 percent by weight of polymerized olefinically unsaturated nitriles. Most preferably the coatings contain more than 65 percent by weight of polymerized olefinically unsaturated nitrile.

The coating is comprised of several polymerized monomers grafted onto an elastomer. The coating's superior properties are derived from the ability of the graft polymer to crosslink. This ability to crosslink results from the incorporation into the grafted portion of the polymer a monomer containing two or more double bonds. One of the double bonds

reacts in the initial polymerization reaction, permitting the monomer to become part of the polymer backbone. A second double bond remains unreacted and is thus available for the subsequent crosslinking reaction. Typically this subsequent crosslinking reaction is initiated after the graft polymer is applied to a substrate on which the coating is desired.

Specifically, the coating compositions of the instant invention comprise crosslinked copolymers of (1) olefinically unsaturated nitrile monomers, (2) ester monomers, (3) monomers containing at least two double bonds, and (4) a rubbery polymer containing 50 to 100 percent by weight of a conjugated diene monomer and 0 to 50 percent by weight of at least one comonomer which is copolymerizable with the conjugated diene monomer. These crosslinked coatings contain at least 10 percent by weight of a polymerized unsaturated nitrile.

In a preferred embodiment the coating is a crosslinked copolymer of (1) approximately 50 to 95 percent by weight of at least one olefinically unsaturated nitrile, (2) approximately 2 to 45 percent by weight of an ester, (3) approximately 2 to 45 percent by weight of a monomer containing at least two double bonds, and (4) a rubbery polymer containing 50 to 100 percent of a conjugated diene monomer and 0 to 50 percent by weight of at least one other olefinically unsaturated monomer which is copolymerizable with the conjugated diene monomer; such that the given percentages of (1), (2) and (3) are based upon the combined weights of (1), (2) and (3) and that the resulting coating contain approximately 2 to 25 parts of (4) per 100 parts of (1), (2) and (3).

The olefinically unsaturated nitriles suitable for the present invention include the alpha,beta-unsaturated mononitriles having the structure:

$$CH_2 = \underset{\displaystyle R}{\underset{|}{C}} - CN$$

where R is hydrogen, a lower alkyl group having from 1 to 4 carbon atoms or a halogen. Such compounds include acrylonitrile, alpha-chloro acrylonitrile, alpha-flouro acrylonitrile, methacylonitrile, ethyacrylonitrile and the like. The most preferred olefinically unsaturated nitriles useful in the present invention are acrylonitrile, methacrylonitrile and mixtures thereof.

The esters of olefinically unsaturated carboxylic acids suitable for this invention include the acrylate esters having the structure:

$$CH_2 = \overset{\displaystyle R'}{\overset{|}{C}} - \overset{\displaystyle O}{\overset{||}{C}} - OR''$$

where R' is hydrogen, an alkyl group having from 1 to 30 carbon atoms, preferably from 1 to 6 carbon atoms, or a halogen and R" is an alkyl group having from 1 to 8 carbon atoms, preferably 1 to 4 carbon atoms. Compounds of this type include methyl acrylate, ethyl acrylate, the propyl acrylates, the butyl acrylates, the amyl acrylates, the hexyl acrylates, 2-ethyl hexylacrylate, methyl methacrylate, ethyl methacrylate, the propyl methacrylates, the butyl methacrylates, the amyl methacrylates, the hexyl methacrylates, methyl alpha-chloro

acrylates, ethyl alpha-chloro acrylates and the like. Most preferred are the lower acrylates such as methyl acrylate and ethyl acrylate.

The doubly unsaturated monomers useful in the present invention contain at least two carbon to carbon double bonds, such that one double bond polymerizes in the initial polymerization reaction from which the polymer latex is derived and a second double bond participates in the subsequent crosslinking reaction. Representative of the suitable monomers are allyl acrylate, allyl methacrylate, diallyl adipate, dicyclopentadiene acrylate, dicyclopentenyloxyethyl acrylate, dicyclopentenyloxyethyl methacrylate, diallyl maleate, alkylene glycol dimethacrylates such as tetraethylene glycol dimethacrylate, pentaethylene glycol dimethacrylate, tetraethylene glycol diacrylate, hexaethylene glycol acrylate and the like, divinyl substituted aromatics such as divinyl benzene and the like, and bisacrylamide and like compounds.

The rubbery polymers used contain 50 to 100 percent by weight of conjugated diene monomer. Preferred conjugated dienes are butadiene and isoprene. The preformed rubbery polymer also contains 0 to 50 percent by weight of at least one unsaturated comonomer which is polymerizable with the conjugated diene. Representative of suitable unsaturated comonomers are styrene; an alpha,beta-unsaturated mononitrile having the structure:

$$CH_2 = \underset{\displaystyle R}{\underset{|}{C}} - CN$$

where R is as previously designated; and an ester of an olefinically unsaturated carboxylic acid of the structure:

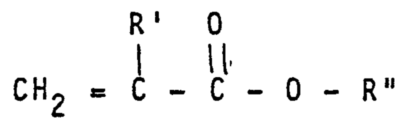

where R' and R" are as previously designated. Typically these rubbery polymers are preformed and added to the monomer mixture as a latex. The amount of rubbery polymer in this latex is typically between 20 to 40 parts elastomer solids to between 60 to 80 parts water. The amount of rubbery polymer present in the reaction mixture at the beginning of the graft reaction can range between 2 and 25 parts of rubbery polymer (solids basis) per 100 parts of charged monomer.

In addition to the olefinically unsaturated nitrile monomers, ester monomers and the monomers containing at least two double bonds and the rubbery polymer, the coatings of the instant invention may contain other olefinically unsaturated monomers which are copolymerizable with olefinically unsaturated nitriles. Representative of the other olefinically unsaturated monomers are vinyl esters, vinyls, ethers, alpha-olefins, conjugated dienes, vinyl aromatic monomers, indene and the like.

A method for preparing these tough, solvent resistant coatings comprises the steps of

(A) preparing a stable polymer latex by polymerizing in an aqueous medium a mixture of (1) approximately 50 to 95 percent by weight of at least one olefinically unsaturated nitrile, (2) approximately 2 to 45 percent by weight of an ester of olefinically unsaturated carboxylic acid, (3)

approximately 2 to 45 percent by weight of a doubly unsaturated monomer containing two or more carbon to carbon double bonds, where the given percentages of (1), (2) and (3) are based upon the combined weights of (1), (2) and (3), with (4) from 2 to 25 parts per 100 parts of (1), (2) and (3) of a rubbery polymer containing approximately 50 to 100 percent by weight of a conjugated diene monomer and 0 to 50 percent by weight of at least one other olefinically unsaturated monomer which is copolymerizable with the conjugated diene monomer;

(B) applying the latex of (A) to a substrate and

(C) initiating the crosslinking reaction.

In step (A), the polymer latex is prepared in an aqueous medium in the presence of a suitable polymerization catalyst. This aqueous medium may also contain chain transfer agents, emulsifiers and other stability agents.

The catalyst, usually required for satisfactory polymerization rate, may be any of those commonly employed for the polymerization of nitrile or acrylate esters including the various peroxygen compounds such as hydrogen peroxide, benzoyl peroxide, pelargonyl peroxide, cumene hydroperoxide, tertiary butyl hydroperoxide, tertiary butyl diperphthalate, tertiary butyl perbenzoate, sodium, potassium and ammonium persulfate and others, such as those disclosed in U.S. Patents Nos. 2,471,959 and 2,491,471.

Particularly preferred as polymerization initiators are the water-soluble peroxygen compounds such as hydrogen peroxide, and the sodium, potassium and ammonium persulfates, the water-soluble oxidation-reduction or "redox" types of catalysts and the heavy metal activated, water-soluble peroxygen and redox catalysts. Included in this preferred list

are the water-soluble persulfates; the combination of one of the water-soluble peroxygen compounds such as potassium persulfate with a reducing substance such as a polyhydroxy phenol, an oxidizable sulphur compound such as sodium bisulfite, sodium sulfite and the like; the combination of a water-soluble peroxygen compound such as potassium persulfate and dimethylaminopropionitrile; the combination of a water-soluble peroxygen compound with a reducing sugar or with a combination of a dimercapto compound and a water-soluble ferricyanide compound and others. Heavy metal ions which greatly activate potassium persulfate and the redox catalyzed polymerizations include those of silver, copper, iron, cobalt, nickel and others. The preferred range of catalyst as above defined, is from about 0.01 to 5 parts by weight per one-hundred parts by weight of monomers.

Suitable emulsifiers include fatty acid soaps such as sodium laurate; organic sulfates and sulfonates such as sodium lauryl sulfate, the alkali metal salts of sulfonated petroleum or paraffinic oils, the sodium salts of aromatic sulfonic acids such as the sodium salts of naphthalene sulfonic acids, the sodium salts of dodecane-1-sulfonic acid, octadecane-1-sulfonic acid, etc.; arylalkyl sulfonates such as sodium isopropyl benzene sulfonate, sodium isobutyl naphthalene sulfonate, and alkali metal salts of polymerized alkyl naphthalene sulfonic acids; alkali metal and ammonium salts of sulfonated dicarboxylic acid esters and amides such as sodium dodecyl sulfosuccinate, sodium N-octadecyl sulfosuccinimide, the polyalkyl and polyalkaryl alkoxylene phosphonate acids and salts more fully described in U.S. Patent No. 2,853,471, the so-called cationic emulsifiers such as the salts of strong

inorganic acids and organic bases containing long carbon chains, for instance, lauryl amine hydrochloride, the hydrochloride of diethylaminoethyl decylamine, trimethyl cetyl ammonium bromide, dodecyl trimethyl ammonium bromide, the diethyl cyclohexylamine salt of cetyl sulfonic ester and others may be used.

In addition to the above and other polar or ionic emulsifiers, still other materials which may be used, singly or in combination with one or more of the above types of emulsifiers include the so-called "nonionic" emulsifiers such as the polyether alcohols prepared by condensing ethylene or propylene oxide with higher alcohols, the fatty alkylamine condensates, the diglycol esters of lauric, oleic and stearic acids, and others. It is often desirable to add post-polymerization emulsifiers to the latexes embodied herein for improved stability.

While the polymerization may be carried out in the presence of air, the rate of reaction is ordinarily faster in the absence of oxygen and hence, polymerization in an evacuated vessel, at reflux, or under an inert atmosphere such as nitrogen or $CO_2$ is preferred. The temperatures at which the polymerization is carried out is not critical, and the temperature may be varied widely from -30°C to 100°C or higher, though best results are generally obtained at a temperature of from about 0°C to about 70°C. Although the pH of the polymerization system is not critical, it is preferred that a pH of about 6 be employed during the polymerization reaction. The polymer latex may be adjusted to any desired pH. The polymerization may be a batch polymerization or one or more of the components, i.e., monomers, catalyst, activator,

emulsifier, water, etc. may be added incremently or continuously during the polymerization reaction.

The solids content of the resulting latex is typically between about 15 and 60. Typically the extent of polymerization is high and conversions greater than 90 prcent are achieved.

Before the polymer latex is applied to a substrate in step (B), it is typically mixed with a coalescing solvent. The addition of the coalescing agent lowers the minimum film-forming temperature by softening the polymer particles sufficiently to allow them to flow together at a lower temperature. Coalescing agents suitable for use in the instant invention are solvents for the polymer in the latex. These coalescing agents have a boiling point of between 100°C and 300°C and they will not azeotrope with water. Preferred coalescing agents are dimethylformamide, dimethylacetamide, methyl pyrrolidone, dimethyl sulfoxide, diethylacetamide, diethyl formamide, acetonitrile, propylene carbonate, ethylene carbonate, benzaldehyde, methoxyethanol, glycol carbonate and tetramethylene sulfone. The most preferred coalescing agent is dimethylformamide. Typically the amount of coalescing agent used is approximately between 0.5 and 30.0 percent, based on the total weight of solids in the latex.

Optionally, before the latex is applied to the substrate, a polymerization initiator or catalyst may be added to the latex. Suitable initiators are the various peroxygen compounds such as the organic peroxides and hydroperoxides, the sodium, potassium and ammonium persulfates, and the heavy metal activated peroxygen and redox catalysts described earlier as polymerization initiators or catalysts for the latex forming

M I S S I N G

## SPECIFIC EMBODIMENTS

In order to better illustrate the instant invention the following Examples are provided:

### Example A

All of the coatings illustrated in the remaining examples incorporate a butadiene-acrylonitrile preformed elastomer (or rubbery polymer) latex. This rubbery latex can be prepared by polymerizing with continuous agitation at 45°C in the substantial absence of oxygen a mixture of the following ingredients:

| Ingredient | Parts |
|---|---|
| acrylonitrile | 40 |
| butadiene-1,3 | 60 |
| GAFAC RE-610* (emulsifier) | 2.4 |
| azobisisobutyronitrile | 0.3 |
| t-dodecyl mercaptan | 0.5 |
| water | 200 |

*A mixture of $R-O-(CH_2CH_2O)_n-PO_3M_2$ and $[R-O-(CH_2CH_2O)_n]_2PO_2M$ where n is a number from 1 to 40, R is an alkyl or arylalkyl group and M is hydrogen, ammonia or an alkali metal. This emulsifier is a product of GAF Corporation.

Before the reaction is started, the pH of the mixture is adjusted to about 8 with KOH. The polymerization is carried

for approximately 22 hours. Conversions of 92 percent and total solids of 33.1 percent are typical.

Example 1

A polymer latex was prepared in an aqueous emulsion from the following ingredients:

| Ingredient | Parts by Weight |
|---|---|
| acrylonitrile | 70.0 |
| butyl acrylate | 15.0 |
| dicyclopentenyloxyethyl methacrylate | 15.0 |
| butadiene-acrylonitrile preformed rubbery polymer solids | 14.0 |
| distilled water | 170.0* |
| sodium lauryl sulfate (an emulsifier) | 1.6 |
| potassium persulfate (a free radical initiator) | 0.15 |
| n-octyl mercaptan (chain transfer agent) | 0.4 |

*The amount of water in all the examples includes the water added with the preformed elastomer latex.

The sodium lauryl sulfate was dissolved in distilled water and charged to the reaction vessel. A latex containing the butadiene-acrylonitrile rubbery polymer was added next, followed by the acrylonitrile, butyl acrylate and dicyclopentenyloxyethyl methacrylate monomers. The mercaptan was then added and the reaction vessel was then purged with nitrogen. Lastly the potassium persulfate was added and the system sealed.

The reaction vessel was heated to 60°C with mixing and the reaction allowed to continue for six hours. Upon cooling, the latex was filtered through cheesecloth to remove any prefloc which may have formed.

An aliquot of the latex was removed and the solids content determined. The percent monomer conversion was calculated on the basis of the solids level.

| | |
|---|---|
| solids content: | 38.4 percent |
| monomer conversion: | 93.7 percent |
| prefloc (dry) | 0.4 percent |

The latex was then modified by the addition of N,N-dimethylformamide (DMF) coalescent equal to 20 percent of the weight of the solids in the latex. A polyvinylpyrrolidone thickener was then added to bring the latex to the desired consistency.

The modified latex was then applied to a series of 4" x 6" x 24 gauge cold rolled steel panels, by using a wire wound draw bar. A film was formed by heating the panels at approximately 95°C for approximately 1 to 1-1/2 minutes. The resulting coated panels were then baked at 230°C for 15 minutes in a forced air oven. The coatings ranged in thickness from 0.2 to 0.3 mils.

The following test results were obtained:

| | | |
|---|---|---|
| Pencil hardness (ASTM D3363-74) | 8H | |
| Gardner Reverse Impact (in-lbs) (ASTM D-2794) | 160 | |
| Conical Mandrel (ASTM D522-60) | 30.6 | Elongation percent |
| Cross-Cut Adhesion (25 squares) | 25 | |
| Rust rating after 258 hrs in salt spray (ASTM B117-74) | 9, 10 | |

In the rust rating test, "9" indicates less than 0.03 percent surface rust and "10" indicates less than 0.01 percent surface rust

Good solvent resistance was indicated when a puddle of DMF was placed on a coated tested panel lying on a horizontal surface and allowed to stand for one hour. Scrubbing this area with a paper towel had no effect on the coating.

Example 2

The procedure of Example 1 was repeated for a polymer latex prepared in an aqueous emulsion from the following ingredients:

| Ingredient | Parts by Weight |
|---|---|
| acrylonitrile | 70.0 |
| butyl acrylate | 15.0 |
| diallyl adipate | 15.0 |
| butadiene-acrylonitrile pre-formed elastomer (solids) | 10.0 |
| distilled water | 200.0 |
| sodium lauryl sulfate (an emulsifier) | 1.6 |
| potassium persulfate (a free radical initiator) | 0.06 |
| n-octyl mercaptan (a chain transfer agent) | 0.4 |

An aliquot of the latex was removed and the solids content determined. The percent monomer conversion, calculated on the basis of the solids level was:

| | |
|---|---|
| solids content | 31.2 percent |
| monomer conversion | 85.3 percent |
| prefloc (dry) | 0.95 percent |

No coalescent was added. The latex exhibited a minimum film temperature (MFT) of 60°C. The latex was applied to a steel panel as in Example 1. A film was formed by heating the panel at 95°C for approximately one minute. The coated panel was then baked at 200°C for three minutes.

The pencil hardness of the film applied to the steel panel was 8H. In an improvised adhesion test, scotch tape applied to the coating was ripped off and the coating was unaffected.

Example 3

The procedure of Example 1 was repeated for a polymer latex prepared in an aqueous emulsion from the following ingredients:

| Ingredient | Parts by Weight |
|---|---|
| acrylonitrile | 54.0 |
| butyl acrylate | 30.4 |
| allyl acrylate | 15.6 |
| butadiene-acrylonitrile pre-formed elastomer (solids) | 10.0 |
| distilled water | 200.0 |
| GAFAC RE-610® (an emulsifier) | 1.6 |
| potassium persulfate (a free radical initiator) | 0.06 |
| n-octyl mercaptan (a chain transfer agent) | 0.4 |

The solids content of the latex was 30.5 percent. The monomer conversion, calculated on the basis of solids level, was 83.2 percent. The latex exhibited a minimum film forming temperature (MFT) of 51°C.

The latex was applied to a steel panel. A film was formed by heating the panel at 95°C for approximately one minute. The coated panel was then baked at 200°C for three minutes. The pencil hardness of the film applied to the steel panel was 8H.

Example 4

The purpose of this example is to illustrate the importance of the baking temperature in order to initiate the crosslinking reaction and to provide a durable coating.

The procedure of Example 1 was repeated for a crosslinkable polymer latex prepared in an aqueous emulsion from the following ingredients:

| Ingredient | Parts by Weight |
|---|---|
| acrylonitrile | 46.8 |
| 2-ethyl hexyl acrylate | 37.9 |
| allyl methacrylate | 15.3 |
| butadiene-acrylonitrile pre-formed elastomer | 10.0 |
| distilled water | 200.0 |
| GAFAC RE-610® (an emulsifier) | 1.6 |
| potassium persulfate (a free radical initiator) | 0.06 |
| n-octyl mercaptan (a chain transfer agent) | 0.4 |

The latex was cast on two glass plates at 95°C to form a film. The films were removed from the glass plate. One film was heated at 200°C for approximately two minutes and the other film was left untreated. Both films were immersed in N,N-dimethylformamide (DMF). The untreated film dissolved in

approximately 1 to 2 minutes. The film heated at 200°C was unaffected after one week.

Example 5

The procedure of Example 1 was repeated for a polymer latex prepared in an aqueous emulsion from the following ingredients:

| Ingredients | Parts by Weight |
|---|---|
| acrylonitrile | 70.0 |
| methyl acrylate | 15.0 |
| diallyl adipate | 15.0 |
| butadiene-acrylonitrile pre-formed elastomer | 14.0 |
| distilled water | 170.0 |
| sodium lauryl sulfate (an emulsifier) | 1.6 |
| potassium persulfate (a free radical initiator) | 0.2 |
| n-octyl mercaptan (a chain transfer agent) | 0.4 |

The solids content of the latex was 37.05 percent. The monomer conversion, calculated on the basis of solids level was 89.8 percent.

The latex was modified by the addition of a coalescent, 20 weight percent of N,N'-dimethylformamide (DMF) based on the solids content of the latex, and a thickener, 0.6 weight percent of polyvinylpyrrolidone based on the total unmodified latex weight. The modified latex was applied to steel panels. The coated panels were heated at 95°C for approximately one minute to yield an even film, and then baked at 230°C for approximately 15 minutes.

The following test results were obtained:



0139453

| | |
|---|---|
| Pencil Hardness (ASTM D3363-74) | 8H |
| Gardner Reverse Impact (in-lbs) (ASTM D-2794) | 40 |
| Conical Mandrel (ASTM D522-60) | 30.6 percent Elongation |
| Crosscut Adhesion (25 squares) | 25 |
| Rust Rating after 400 hrs in salt spray (ASTM B117-74) | 9 |

Example 6

The procedures and modifications of Example 5 were repeated for a latex prepared from the following ingredients:

| Ingredient | Part by Weight |
|---|---|
| acrylonitrile | 70.0 |
| methyl acrylate | 15.0 |
| dicyclopentenyloxyethyl acrylate | 15.0 |
| butadiene-acrylonitrile pre-formed elastomer (solids) | 14.0 |
| distilled water | 170.0 |
| sodium lauryl sulfate | 1.6 |
| potassium persulfate | 0.2 |
| n-octyl mercaptan | 0.4 |

The following test results were obtained:

| | |
|---|---|
| Pencil Hardness (ASTM D3363-74) | 8H |
| Gardner Reverse Impact (in-lbs) (ASTM D-2794) | 140 |
| Conical Mandrel (ASTM D522-60) | 30.6 percent Elongation |
| Crosscut Adhesion (25 squares) | 25 |
| Rust Rating after 400 hrs in salt spray (ASTM B117-74) | 9 |

Example 7

A latex sample of the type described in Example 1 was modified by the addition of 0.2 part dicumyl peroxide (DICUP)

per 100 grams of resin solids and applied to several 4"x6"x24 gauge cold rolled steel test panels. Films were formed by heating the panels at 95°C for 1 to 1-1/2 minutes. The resulting panels were divided into three groups and baked at 220°C for 5 minutes, 8 minutes and 14 minutes, respectively. A similar series of panels was prepared using the corresponding latex with no added dicumyl peroxide. All of the crosslinked panels, from both series, exhibited pencil hardness ratings of 8H. Exposure to N,N-dimethylformamide (DMF), however, provided the best measure of the extent of crosslinking. The test panels were placed on a horizontal surface. A puddle of DMF was placed on each panel and allowed to stand for 1 hour. The following results were obtained:

TIME REQUIRED FOR DMF TO ATTACK COATING

| | 5 Min. Bake | 8 Min. Bake | 14 Min. Bake |
|---|---|---|---|
| No Added DICUP | 21 min. | 22 min. | 60 min.* |
| 0.2 Parts DICUP Added | 60 min.* | 60 min.* | -- |

*These samples showed no effect from exposure to DMF after 1 hour.

These results show that the addition of a small quantity of a free radical initiator to a finished latex can cause a significant reduction in the bake time required to achieve maximum crosslinking.

Although only a few embodiments of this invention have been described above, it is to be appreciated that many additions and modifications can be made without departing from the spirit and scope of the invention. These and all other modifications are intended to be included within the scope of this invention, which is to be limited only by the following claims.

CLAIMS

1. A coating composition comprising a crosslinked copolymer of:

(1) an olefinically unsaturated nitrile having the structure

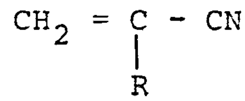

where R is hydrogen, a lower alkyl group having from 1 to 4 carbon atoms, or a halogen;

(2) an ester having the structure

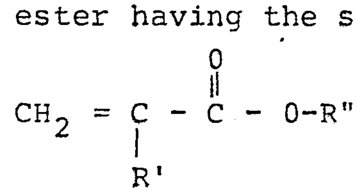

where R' is hydrogen, an alkyl group having from 1 to 4 carbon atoms or a halogen and R" is an alkyl group having from 1 to 6 carbon atoms;

(3) a monomer containing at least two carbon to carbon double bonds such that one double bond will partake in an initial graft polymerization reaction and a second double bond will react in a subsequent reaction to crosslink the graft polymers; and

(4) a rubbery polymer containing 50 to 100 percent by weight of a conjugated diene monomer and 0 to 50 percent by weight of at least one comonomer which is copolymerizable with the conjugated diene monomer;

where the crosslinked copolymer contains at least 10 percent by weight of a polymerized olefinically unsaturated nitrile.

2. A composition as claimed in claim 1 characterised in that the crosslinked copolymer is of

(1) approximately 10 to 95 percent by weight of at least one olefinically unsaturated nitrile having the structure

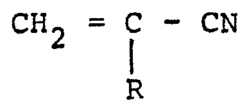

where R is hydrogen, a lower alkyl group having from 1 to 4 carbon atoms, or a halogen;

(2) approximately 2 to 45 percent by weight of an ester having the structure

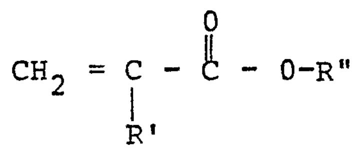

where R' is hydrogen, an alkyl group having from 1 to 4 carbon atoms or a halogen and R" is an alkyl group having from 1 to 6 carbon atoms;

(3) approximately 2 to 45 percent by weight of a monomer containing at least two carbon to carbon double bonds such that one double bond will partake in an initial graft polymerization reaction and a second double bond will react in a subsequent reaction to crosslink the graft polymers;

where the given percentages of (1), (2) and (3) are based upon the combined weights of (1), (2) and (3), and

(4) from 2 to 25 parts per 100 parts of (1), (2) and (3) of a rubbery polymer containing 50 to 100 percent by weight of a conjugated diene monomer and 0 to 50 percent by weight of at least one comonomer which is copolymerizable with the conjugated diene monomer.

3. A composition as claimed in claim 2 characterised in that the crosslinked copolymer is of

(1) approximately 50 to 95 percent by weight of at least one olefinically unsaturated nitrile having the structure

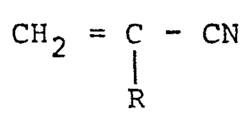

where R is hydrogen, a lower alkyl group having from 1 to 4 carbon atoms, or a halogen;

(2) approximately 2 to 45 percent by weight of an ester having the structure

$$CH_2 = \underset{\underset{R'}{|}}{C} = \overset{\overset{O}{\|}}{C} - O\text{-}R''$$

where R' is hydrogen, an alkyl group having from 1 to 4 carbon atoms or a halogen and R" is an alkyl group having from 1 to 6 carbon atoms;

(3) approximately 2 to 45 percent by weight of a monomer containing at least two carbon to carbon double bonds such that one double bond will partake in an initial graft polymerization reaction and a second double bond will react in a subsequent reaction to crosslink the graft polymers;

where the given percentages of (1), (2) and (3) are based upon the combined weights of (1), (2) and (3), and

(4) from 2 to 25 parts per 100 parts of (1), (2) and (3) of a rubbery polymer containing 50 to 100 percent by weight of a conjugated diene monomer and 0 to 50 percent by weight of at least one comonomer which is copolymerizable with the conjugated diene monomer.

4. A composition as claimed in any of claims 1 to 3 characterised in that the olefinically unsaturated nitrile of (1) is at least one of acrylonitrile or methacrylonitrile.

5. A composition as claimed in any of claims 1 to 4 characterised in that the ester is at least one of methyl acrylate, ethyl acrylate, propyl acrylate or butyl acrylate.

6. A composition as claimed in any of claims 1 to 5 characterised in that the monomer containing at least two double bonds is at least one of allyl acrylate, allyl methacrylate, dially adipate, dicyclopentadiene acrylate,

dicyclopentenyloxyethyl acrylate, dicyclopentenyloxyethyl methacrylate or diallyl maleate.

7. A composition as claimed in any of claims 1 to 6 characterised in that the conjugated diene is at least one of butadiene or isoprene.

8. A composition as claimed in any of claims 1 to 7 characterised in that the comonomer in the rubbery polymer is at least one of

(a) styrene;

(b) an olefinically unsaturated nitrile having the structure

$$CH_2 = \underset{\displaystyle R}{\underset{|}{C}} - CN$$

where R is hydrogen, a lower alkyl group having from 1 to 4 carbon atoms, or a halogen; or

(c) an ester having the structure

$$CH_2 = \overset{\displaystyle R'}{\overset{|}{C}} - \overset{\displaystyle O}{\overset{\|}{C}} - OR''$$

where R' is hydrogen, an alkyl group having from 1 to 4 carbon atoms or a halogen and R" is an alkyl group having from 1 to 6 carbon atoms.

9. A composition as claimed in claim 8 characterised in that olefinically unsaturated nitrile comonomer in the rubbery polymer is acrylonitrile or methacrylonitrile.

10. A composition as claimed in claim 8 characterised in that the ester comonomer in the rubbery polymer is at least one of methyl acrylate, ethyl acrylate, proply acrylate or butyl acrylate.

11. A method for preparing a coating comprising the steps of

(A) preparing a stable latex of the polymer coating, comprising polymerizing in an aqueous medium in the substantial absence of molecular oxygen at a temperature in the range of 0 to 100°C and in the presence of a free radical initiator, a mixture

of (1) an olefinically unsaturated nitrile monomer, (2) an ester of olefinically unsaturated carboxylic acids, (3) an unsaturated monomer containing two or more carbon to carbon double bonds such that one double bond will partake in an initial graft polymerization reaction and a second double bond will react in a subsequent reaction to crosslink the graft polymers, and (4) a rubbery polymer containing approximately 50 to 100 percent by weight of a conjugated diene monomer and 0 to 50 percent by weight of at least one other olefinically unsaturated monomer which is copolymerizable with the conjugated diene monomer;

where the coating will contain at least 10 percent by weight of a polymerized olefinically unsaturated nitrile;

(B) applying the latex to a substrate; and

(C) initiating the crosslinking reaction.

12. A method as claimed in claim 11 for preparing a coating comprising the steps of

(A) preparing a stable latex of the polymer coating, comprising polymerizing in an aqueous medium in the substantial absence of molecular oxygen at a temperature in the range of 0 to 100°C and in the presence of a free radical initiator, a monomer mixture of (1) approximately 10 to 95 percent by weight of at least one olefinically unsaturated nitrile monomer, (2) approximately 2 to 45 percent by weight of an ester of olefinically unsaturated carboxylic acids, (3) approximately 2 to 45 percent by weight of an unsaturated monomer containing two or more carbon to carbon double bonds such that one double bond will partake in an initial graft polymerization reaction and a second double bond will react in a

subsequent reaction to crosslink the graft polymers, where the given percentages of (1), (2) and (3) are based upon the combined weights of (1), (2) and (3), and (4) from 2 to 25 parts per 100 parts of (1), (2) and (3) of a rubbery polymer containing approximately 50 to 100 percent by weight of a conjugated diene monomer and 0 to 50 percent by weight of at least one other olefinically unsaturated monomer which is copolymerizable with the conjugated diene monomer;

(B) applying the latex to a substrate; and

(c) initiating the crosslinking reaction.

13. A method as claimed in claim 12 characterized in that the monomer mixture is approximately 50 to 95 percent by weight of at least one olefinically unsaturated nitrile monomer.

14. A method as claimed in any of claims 11 to 13 characterised in that the components of the copolymer are as defined in any of claims 1 to 10.

15. A method as claimed in any of claims 11 to 14 characterised in that the crosslinking reaction is initiated by heating the latex coated substrate to a temperature sufficient to initiate the crosslinking reaction for a time sufficient for the crosslinking to occur.

16. A method as claimed in any of claims 11 to 14 characterised in that the crosslinking reaction is initiated by radiation curing.

17. A method as claimed in any of claims 11 to 14 characterised in that the crosslinking reaction is initiated by high energy electron bombardment.

18. A method as claimed in any of claims 11 to 17 characterised in that a polymerization initiator is added to the latex prepared in step A before the latex is applied to a substrate in step B.

19. A method as claimed in claim 18 characterised in that the polymerization initiator is dicumyl peroxide.

0139453

European Patent Office

# EUROPEAN SEARCH REPORT

Application number

EP 84 30 6161

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| D,X | US-A-4 329 401 (H. TALSMA et al.)<br>* claims *<br>----- | 1 | C 09 D 3/74<br>C 08 L 51/04 |
| | | | TECHNICAL FIELDS SEARCHED (Int. Cl.4) |
| | | | C 09 D<br>C 08 L |

The present search report has been drawn up for all claims

| Place of search | Date of completion of the search | Examiner |
|---|---|---|
| THE HAGUE | 04-12-1984 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document